(19) **Europäisches Patentamt / European Patent Office / Office européen des brevets**

(11) **EP 4 568 354 A1**

(12) **EUROPEAN PATENT APPLICATION**
published in accordance with Art. 153(4) EPC

(43) Date of publication:
**11.06.2025 Bulletin 2025/24**

(21) Application number: **23867321.4**

(22) Date of filing: **08.09.2023**

(51) International Patent Classification (IPC):
**H04W 48/12** $^{(2009.01)}$

(52) Cooperative Patent Classification (CPC):
**H04W 48/12; H04W 72/0446; H04W 72/232**

(86) International application number:
**PCT/CN2023/117806**

(87) International publication number:
**WO 2024/061031 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.09.2022 CN 202211137677**

(71) Applicant: **Huawei Technologies Co., Ltd.**
**Shenzhen, Guangdong 518129 (CN)**

(72) Inventors:
- **WANG, Hui**
  **Shenzhen, Guangdong 518129 (CN)**
- **LIAO, Shuri**
  **Shenzhen, Guangdong 518129 (CN)**
- **DOU, Shengyue**
  **Shenzhen, Guangdong 518129 (CN)**
- **ZHANG, Jiayin**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) This application provides a communication method and apparatus, to determine, in an NTN network, a physical downlink control channel monitoring occasion corresponding to system information, and reduce an initial access delay when reducing a resource waste caused by blind detection of the system information on the physical downlink control channel monitoring occasion. The method includes: A terminal device receives configuration information, determines, based on the configuration information, a PDCCH monitoring occasion corresponding to first system information, and obtains the first system information from the PDCCH monitoring occasion corresponding to the first system information. The configuration information includes: an index of the first system information, where the first system information includes P types of system information, and P is an integer greater than or equal to 1; a quantity n of SSBs in a $y^{th}$ group in Y groups in one SSB periodicity, where the $y^{th}$ group is any one of the Y groups; and a quantity M of PDCCH monitoring occasions that correspond to the P types of system information and that are included in the $y^{th}$ group.

700

FIG. 7

## Description

This application claims priority to Chinese Patent Application No. 202211137677.0, filed with the China National Intellectual Property Administration on September 19, 2022 and entitled "COMMUNICATION METHOD AND APPARATUS", which is incorporated herein by reference in its entirety.

## TECHNICAL FIELD

This application relates to the communication field, and more specifically, to a communication method and apparatus.

## BACKGROUND

A non-terrestrial network (non-terrestrial network, NTN) includes nodes such as a satellite network, a high altitude platform, and an uncrewed aerial vehicle, and forms, together with a 5th generation (5th generation, 5G) system, a global sea-land-space-air-ground integrated comprehensive communication network that provides seamless coverage, to meet various service requirements.

Ephemeris information of a satellite in the NTN network is carried in system information (system information, SI). To calculate a position of the satellite at each moment, a terminal device needs to obtain the SI in time, to access a cell in time. However, there is a problem that in a 5G standard, search space (search space, SS) of a physical downlink control channel (physical downlink control channel, PDCCH) corresponding to a system information block (system information block, SIB) of new radio (new radio, NR) using an NTN technology does not match a synchronization signal block (synchronization signal block, SSB) pattern. If the terminal device continues to detect the SI in an NR blind detection manner, access efficiency of the terminal device is low. Therefore, how to reduce an initial access delay of the terminal device in a scenario in which 5G is applied to the NTN is a problem that needs to be considered currently.

## SUMMARY

This application provides a communication method and apparatus, to determine, in an NTN network, a physical downlink control channel monitoring occasion corresponding to system information, and reduce an initial access delay when reducing a resource waste caused by blind detection of the system information on the physical downlink control channel monitoring occasion.

According to a first aspect, an embodiment of this application provides a communication method. The method may be performed by a terminal device, or may be performed by a component (for example, a chip or a circuit) in the terminal device. This is not limited. For ease of description, the following uses an example in which the method is performed by the terminal device for description. The method includes: The terminal device receives configuration information. The configuration information includes: an index of first system information; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are included in the $y^{th}$ group, where n is an integer greater than 1, Y is an integer greater than or equal to 1, y is less than or equal to Y, and M is an integer greater than 1. The terminal device determines, based on the configuration information, the physical downlink control channel monitoring occasion corresponding to the first system information. The terminal device obtains the first system information from the physical downlink control channel monitoring occasion corresponding to the first system information. Based on the foregoing solution, based on configuration information that matches an SSB pattern, the terminal device may obtain, by using the configuration information, a quantity of SSBs in one group in one SSB periodicity and a quantity of PDCCHs that correspond to first system information and that are in the group, and determine, based on the configuration information, a PDCCH monitoring occasion corresponding to the first system information, so that search space used when the terminal device searches for system information is optimized, and an initial access delay is reduced.

With reference to the first aspect, in some implementations of the first aspect, the first system information includes one type of system information, and that the terminal device determines, based on the configuration information, the physical downlink control channel monitoring occasion corresponding to the first system information includes: An index I of a physical downlink control channel monitoring occasion corresponding to the type of system information satisfies the following relationship:

$$I = x * n + i * M + K \bmod n + o.$$

K is an index of an SSB corresponding to the type of system information, $X = \lceil W/N \rceil$, x = 0, 1, ... (X-1), N is a total quantity of SSBs in T, $i = \lfloor K/n \rfloor$, o is a quantity of physical downlink control channel monitoring occasions included in a time period of receiving the SSB in the $y^{th}$ group, W is a quantity of physical downlink control channel monitoring occasions in a system information window for receiving the type of system information, T is a time length of the system information window, the system information window is used to receive the type of system information, $\lceil \ \rceil$ indicates rounding up, $\lfloor \ \rfloor$ indicates rounding down, and mod is a modulo operator.

It should be understood that a quantity of SSBs sent in a time period of the SSB in the $y^{th}$ group is n.

Based on the foregoing solution, the terminal device may determine, based on the configuration information, a time domain position of search space of scheduling information of system information carried in the SSB whose index is K, and calculate, by using a formula, a monitoring occasion (a time domain position of search space) of first system information related to random access of the terminal. Because the configuration information matches the SSB pattern, reliability of blind detection performed by the terminal device can be improved, to reduce a delay in obtaining random access related information by the terminal device.

With reference to the first aspect, in some implementations of the first aspect, the first system information includes P types of system information, P is an integer greater than 1, and that the terminal device determines, based on the configuration information, the physical downlink control channel monitoring occasion corresponding to the first system information includes: An index I of a physical downlink control channel monitoring occasion corresponding to a $p^{th}$ type of system information in the P types of system information satisfies the following relationship:

$$I = x * n + i * M + K \bmod n + o.$$

K is an index of an SSB corresponding to the $p^{th}$ type of system information, $X = \lceil W/N \rceil$, x is a value satisfying (x mod P=p-1) in x = 0,1, ... (X-1), p = 1,2 ... P, N is a total quantity of SSBs in T, $i = \lfloor K/n \rfloor$, o is a quantity of physical downlink control channel monitoring occasions included in a time period of receiving the SSB in the $y^{th}$ group, W is a quantity of physical downlink control channel monitoring occasions in a system information window for receiving the P types of system information, T is a time length of the system information window, the system information window is used to receive the P types of system information, the $p^{th}$ type of system information is one of the P types of system information, $\lceil \ \rceil$ indicates rounding up, $\lfloor \ \rfloor$ indicates rounding down, and mod is a modulo operator.

Based on the foregoing solution, the terminal device can perform blind detection on a plurality of pieces of system information in one system information window, to improve network configuration flexibility, reduce a quantity of times of blind detection, and reduce the initial access delay.

With reference to the first aspect, in some implementations of the first aspect, a window length of a physical downlink control channel monitoring window corresponding to the first system information is equal to the SSB periodicity.

The window length of the physical downlink control channel monitoring window corresponding to the first system information is set to be the same as the SSB periodicity, so that a quantity of times of blind detection performed by the terminal device on a physical downlink control channel can be reduced, and system performance can be improved.

With reference to the first aspect, in some implementations of the first aspect, the first system information includes ephemeris information.

With reference to the first aspect, in some implementations of the first aspect, that the terminal device receives configuration information includes: The terminal device receives second system information, where the second system information includes the configuration information.

According to a second aspect, an embodiment of this application provides a communication method. The method may be performed by a terminal device, or may be performed by a component (for example, a chip or a circuit) in the terminal device. This is not limited. For ease of description, the following uses an example in which the method is performed by the terminal device for description. The method includes: The terminal device receives configuration information. The configuration information includes: an index of first system information, where the first system information includes P types of system information, and P is an integer greater than or equal to 1; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to a $p^{th}$ type of system information and that are included in the $y^{th}$ group, where the $p^{th}$ type of system information is one of the P types of system information, n is an integer greater than 1, Y is an integer greater than or equal to 1, y is less than or equal to Y, M is an integer greater than 1, and p is an integer greater than or equal to 1 and less than or equal to P. The terminal device determines, based on the configuration information, the physical downlink control channel monitoring occasion corresponding to the $p^{th}$ type of system information. The terminal device obtains the $p^{th}$ type of system information from the physical downlink control channel monitoring occasion corresponding to the $p^{th}$ type of system information.

Based on the foregoing solution, a physical downlink control channel monitoring occasion corresponding to each type of system information in the first system information is configured by using the configuration information received by the terminal device, so that search space used when the terminal device searches for system information is optimized, and an initial access delay is reduced.

With reference to the second aspect, in some implementations of the second aspect, that the terminal device determines, based on the configuration information, the physical downlink control channel monitoring occasion corresponding to the $p^{th}$ type of system information includes: An index I of the physical downlink control channel monitoring occasion corresponding to the $p^{th}$ type of system information satisfies the following relationship:

$$I = x * n + i * M + K \, mod \, n + o.$$

K is an index of an SSB corresponding to the $p^{th}$ type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions included in a time period of receiving the SSB in the $y^{th}$ group, W is a quantity of physical downlink control channel monitoring occasions that correspond to the $p^{th}$ type of system information and that are in a system information window for receiving the P types of system information, T is a time length of the system information window, the system information window is used to receive the first system information, $\lceil \, \rceil$ indicates rounding up, $\lfloor \, \rfloor$ indicates rounding down, and mod is a modulo operator.

With reference to the second aspect, in some implementations of the second aspect, time domain positions of physical downlink control channel monitoring occasions corresponding to all of the P types of system information are different.

Based on the foregoing solution, the time domain positions of the physical downlink control channel monitoring occasions corresponding to all the types of system information in the first system information are distinguished, so that the terminal device performs blind detection on different types of system information at different time domain positions, to optimize performance of the terminal device.

With reference to the second aspect, in some implementations of the second aspect, a window length of a physical downlink control channel monitoring window corresponding to the P types of system information is equal to the SSB periodicity.

Based on the foregoing solution, the terminal device can perform blind detection on a plurality of pieces of system information in one system information window, to improve network configuration flexibility, reduce a quantity of times of blind detection, and reduce the initial access delay.

With reference to the second aspect, in some implementations of the second aspect, the P types of system information include ephemeris information.

With reference to the second aspect, in some implementations of the second aspect, that the terminal device receives configuration information includes: The terminal device receives second system information, where the second system information includes the configuration information.

According to a third aspect, an embodiment of this application provides a communication method. The method may be performed by a network device, or may be performed by a component (for example, a chip or a circuit) in the network device. This is not limited. For ease of description, the following uses an example in which the method is performed by the network device for description. The method includes: The network device sends configuration information. The configuration information is used by a terminal device to determine a physical downlink control channel monitoring occasion corresponding to first system information, and obtain the first system information from the physical downlink control channel monitoring occasion corresponding to the first system information, and the configuration information includes: an index of the first system information; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are included in the $y^{th}$ group, where n is an integer greater than 1, Y is an integer greater than or equal to 1, y is less than or equal to Y, and M is an integer greater than 1.

Optionally, the method further includes: The network device determines the configuration information.

In an implementation, the network device may determine the configuration information based on an SSB pattern.

With reference to the third aspect, in some implementations of the third aspect, the first system information includes one type of system information, and an index I of a physical downlink control channel monitoring occasion corresponding to the type of system information satisfies the following relationship:

$$I = x * n + i * M + K \, mod \, n + o.$$

K is an index of an SSB corresponding to the type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions included in a time period of sending the SSB in the $y^{th}$ group, W is a quantity of physical downlink control channel monitoring occasions in a system information window for sending the type of system information, T is a time length of the system information window, the system information window is used to send the type of system information, $\lceil \, \rceil$ indicates rounding up, $\lfloor \, \rfloor$ indicates rounding down, and mod is a modulo operator.

With reference to the third aspect, in some implementations of the third aspect, the first system information includes P types of system information, P is an integer greater than 1, and an index I of a physical downlink control channel monitoring occasion corresponding to a $p^{th}$ type of system information in the P types of system information satisfies the following relationship:

$$I = x * n + i * M + K \bmod n + o.$$

K is an index of an SSB corresponding to the $p^{th}$ type of system information, $X = \lceil W/N \rceil$, x is a value satisfying (x mod P=p-1) in x = 0,1, ... (X-1), p = 1,2 ... P, N is a total quantity of SSBs in T, $i = \lfloor K/n \rfloor$, o is a quantity of physical downlink control channel monitoring occasions included in a time period of sending the SSB in the $y^{th}$ group, W is a quantity of physical downlink control channel monitoring occasions in a system information window for sending the P types of system information, T is a time length of the system information window, the system information window is used to send the P types of system information, the $p^{th}$ type of system information is one of the P types of system information, $\lceil \ \rceil$ indicates rounding up, $\lfloor \ \rfloor$ indicates rounding down, and mod is a modulo operator.

With reference to the third aspect, in some implementations of the third aspect, a window length of a physical downlink control channel monitoring window corresponding to the first system information is equal to the SSB periodicity.

With reference to the third aspect, in some implementations of the third aspect, the first system information includes ephemeris information.

With reference to the third aspect, in some implementations of the third aspect, that the network device sends configuration information includes: The network device sends second system information, where the second system information includes the configuration information.

According to a fourth aspect, an embodiment of this application provides a communication method. The method may be performed by a network device, or may be performed by a component (for example, a chip or a circuit) in the network device. This is not limited. For ease of description, the following uses an example in which the method is performed by the network device for description. The network device sends configuration information. The configuration information is used by a terminal device to determine a physical downlink control channel monitoring occasion corresponding to a $p^{th}$ type of system information, and obtain the $p^{th}$ type of system information from the physical downlink control channel monitoring occasion corresponding to the $p^{th}$ type of system information, and the configuration information includes: an index of first system information, where the first system information includes P types of system information, and P is an integer greater than or equal to 1; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the $p^{th}$ type of system information and that are included in the $y^{th}$ group, where the $p^{th}$ type of system information is one of the P types of system information, n is an integer greater than 1, Y is an integer greater than or equal to 1, y is less than or equal to Y, M is an integer greater than 1, and p is an integer greater than or equal to 1 and less than or equal to P.

Optionally, the method further includes: The network device determines the configuration information.

In an implementation, the network device may determine the configuration information based on an SSB pattern.

With reference to the fourth aspect, in some implementations of the fourth aspect, an index I of the physical downlink control channel monitoring occasion corresponding to the $p^{th}$ type of system information satisfies the following relationship:

$$I = x * n + i * M + K \bmod n + o.$$

K is an index of an SSB corresponding to the $p^{th}$ type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions included in a time period of sending the SSB in the $y^{th}$ group, W is a quantity of physical downlink control channel monitoring occasions that correspond to the $p^{th}$ type of system information and that are in a system information window for sending the P types of system information, T is a time length of the system information window, the system information window is used to send the P types of system information, $\lceil \ \rceil$ indicates rounding up, $\lfloor \ \rfloor$ indicates rounding down, and mod is a modulo operator.

With reference to the fourth aspect, in some implementations of the fourth aspect, time domain positions of physical downlink control channel monitoring occasions corresponding to all of the P types of system information are different.

With reference to the fourth aspect, in some implementations of the fourth aspect, a periodicity of a physical downlink control channel monitoring window corresponding to the P types of system information is equal to the SSB periodicity.

With reference to the fourth aspect, in some implementations of the fourth aspect, the P types of system information include ephemeris information.

With reference to the fourth aspect, in some implementations of the fourth aspect, that the network device sends configuration information includes: The network device sends second system information, where the second system information includes the configuration information.

According to a fifth aspect, a communication apparatus is provided. The apparatus is configured to perform the method provided in the first aspect or the second aspect. Specifically, the communication apparatus may include units and/or modules, such as a processing unit and an obtaining unit, configured to perform the method provided in any one of the first aspect or the foregoing implementations of the first aspect. Alternatively, the communication apparatus may include units and/or modules, such as a processing unit and an obtaining unit, configured to perform the method provided in any one of the second aspect or the foregoing implementations of the second aspect.

In an implementation, the communication apparatus is a terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a terminal device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a sixth aspect, a communication apparatus is provided. The apparatus is configured to perform the method provided in the third aspect or the fourth aspect. Specifically, the communication apparatus may include units and/or modules, such as a processing unit and an obtaining unit, configured to perform the method provided in any one of the third aspect or the foregoing implementations of the third aspect. Alternatively, the communication apparatus may include units and/or modules, such as a processing unit and an obtaining unit, configured to perform the method provided in any one of the fourth aspect or the foregoing implementations of the fourth aspect.

In an implementation, the communication apparatus is a terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a terminal device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, this application provides a processor, including an input circuit, an output circuit, and a processing circuit. The processing circuit is configured to: receive a signal through the input circuit, and transmit a signal through the output circuit, so that the processor performs the method in any one of the first aspect to the fourth aspect and the possible implementations of the first aspect to the fourth aspect.

During specific implementation, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to an eighth aspect, a processing apparatus is provided, including a processor and a memory. The processor is configured to read instructions stored in the memory, and may receive a signal by using a receiver, and transmit a signal by using a transmitter, to perform the method in any one of the first aspect to the fourth aspect and the possible implementations of the first aspect to the fourth aspect.

Optionally, there are one or more processors, and there are one or more memories.

Optionally, the memory may be integrated with the processor, or the memory and the processor are disposed separately.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that a related data exchange process, for example, sending indication information may be a process of outputting the indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the eighth aspect may be a chip. The processor may be implemented by hardware, or may be implemented by software. When the processor is implemented by hardware, the processor may be a logic circuit, an integrated circuit, or the like.

When the processor is implemented by software, the processor may be a general-purpose processor, implemented by reading software code stored in the memory. The memory may be integrated into the processor, or may be located outside the processor and exist independently.

According to a ninth aspect, a computer-readable storage medium is provided. The computer-readable storage medium stores program code to be executed by a device, and the program code is used to perform the method provided in any one of the implementations of the first aspect or the second aspect.

According to a tenth aspect, a computer-readable storage medium is provided. The computer-readable storage medium stores program code to be executed by a device, and the program code is used to perform the method provided in any one of the implementations of the third aspect or the fourth aspect.

According to an eleventh aspect, a computer program product including instructions is provided. When the computer program product runs on a computer, the computer is enabled to perform the method provided in any one of the implementations of the first aspect or the second aspect.

According to a twelfth aspect, a computer program product including instructions is provided. When the computer program product runs on a computer, the computer is enabled to perform the method provided in any one of the implementations of the third aspect or the fourth aspect.

According to a thirteenth aspect, a communication system is provided, including the communication apparatus according to the fifth aspect and the communication apparatus according to the sixth aspect.

For specific beneficial effects brought by the third aspect to the thirteenth aspect, refer to descriptions of beneficial effects in the first aspect or the second aspect. Details are not described herein again.

## BRIEF DESCRIPTION OF DRAWINGS

FIG. 1 is a diagram of a network architecture to which an embodiment of this application is applicable;
FIG. 2 is a diagram of an application scenario according to an embodiment of this application;
FIG. 3 is a diagram of another application scenario according to an embodiment of this application;
FIG. 4 is a diagram of a PDCCH monitoring occasion corresponding to an existing first type of system information;
FIG. 5 is a diagram of a PDCCH monitoring occasion corresponding to an existing second type of system information;
FIG. 6 shows an SSB pattern to which an embodiment of this application is applicable;
FIG. 7 is a schematic flowchart of a communication method 700 according to an embodiment of this application;
FIG. 8 is a diagram of a PDCCH monitoring occasion corresponding to a first type of first system information in a communication method 700 according to an embodiment of this application;
FIG. 9 is a diagram of a PDCCH monitoring occasion corresponding to a second type of first system information in a communication method 700 according to an embodiment of this application;
FIG. 10 is a diagram in which a periodicity of a PDCCH monitoring window corresponding to first system information is not equal to an SSB periodicity according to an embodiment of this application;
FIG. 11 is a schematic flowchart of a communication method 1100 according to an embodiment of this application;
FIG. 12 is a diagram of a PDCCH monitoring occasion corresponding to one type of first system information in a communication method 1100 according to an embodiment of this application;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a chip system 1500 according to an embodiment of this application.

## DESCRIPTION OF EMBODIMENTS

The following describes technical solutions of this application with reference to the accompanying drawings.

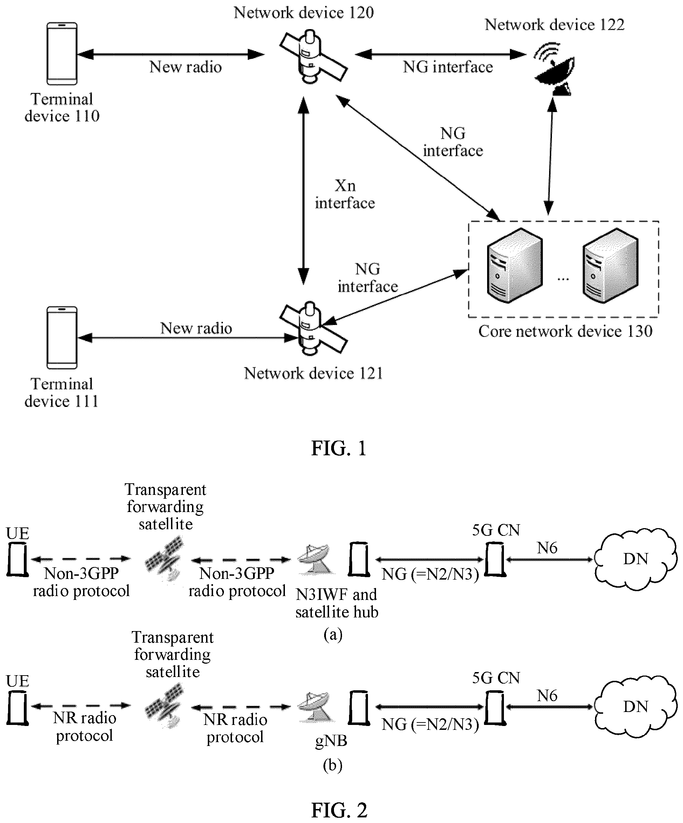

FIG. 1 is a diagram of a network architecture according to an embodiment of this application. FIG. 1 shows an example of a network architecture in which a satellite communication system is integrated with a $5^{th}$ generation mobile communication technology ($5^{th}$ generation mobile communication technology, 5G). The network architecture includes at least one terminal device, for example, a terminal device 110 and a terminal device 111, and at least one network device, for example, a network device 120, a network device 121, a network device 122, and a core network device 130. The network device may be a satellite and a gateway (gateway), and is configured to provide a communication service for the terminal device. The gateway may also be referred to as a terrestrial station, a gateway station, or the like. A link between the satellite and the terminal device is referred to as a service link (service link), and a link between the satellite and the gateway is a feeder link (feeder link).

In a 5G communication system, a terrestrial terminal device accesses a network through 5G new radio, and a 5G network device is deployed on a satellite and connected to a terrestrial core network device through a radio link. In addition, a radio link exists between satellites to implement signaling exchange and user data transmission between network devices. Network nodes and interfaces between the network nodes in FIG. 1 are described below.

The terminal device in embodiments of this application may also be referred to as a terminal, an access terminal, user equipment, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like. The wearable device may also be referred to as a wearable intelligent device, and is a general term of wearable devices, such as glasses, gloves, watches, clothes, and shoes, that are intelligently designed and developed for daily wear by using a wearable technology. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical signs.

The network device in embodiments of this application may be any communication device that has a wireless transceiver function and that is configured to communicate with user equipment, may be a network device deployed on a satellite, or may be a network device deployed on the ground. The network device includes but is not limited to an evolved NodeB (evolved NodeB, eNB), a NodeB (NodeB, NB), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission point, TP), a transmission and reception point (transmission and reception point, TRP), or the like. The network device may alternatively be a gNB or a transmission point (TRP or TP) in 5G, for example, an NR system, or one antenna panel or a group of antenna panels (including a plurality of antenna panels) of a base station in a 5G system, or may be a network node included in a gNB or a transmission point, for example, a baseband unit (BBU), a distributed unit (distributed unit, DU), or the like. In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network, or the CU may be classified into a network device in a core network (core network, CN). This is not limited in this application.

The core network device 130 is configured to provide services such as initial access control, mobility management, session management, user security authentication, and charging. The core network device includes a plurality of functional units, and may be classified into a control-plane functional entity and a data-plane functional entity. The functional entities are not shown in FIG. 1.

New radio is a radio link between the terminal device and the network device.

An Xn interface is an interface between network devices, and is mainly used for signaling exchange such as handover.

An NG interface is an interface between the network device and the core network device, and mainly exchanges signaling such as NAS signaling of the core network and service data of the user.

In a future communication system, for example, a 6G communication system, the foregoing device may still use a name of the device in the 5G communication system, or may have another name. This is not limited in embodiments of this application. Functions of the foregoing devices may be implemented by one independent device, or may be jointly implemented by several devices. During actual deployment, network elements in the core network may be deployed on a same physical device or different physical devices. This is not limited in embodiments of this application. FIG. 1 is merely an example, and does not constitute any limitation on the protection scope of this application. The communication method provided in embodiments of this application may further relate to a network element or a device that is not shown in FIG. 1. Certainly, the communication method provided in embodiments of this application may alternatively include only some devices shown in FIG. 1. This is not limited in embodiments of this application.

The foregoing network architecture used in embodiments of this application is merely an example for description, and a network architecture applicable to embodiments of this application is not limited thereto. Any network architecture that can implement functions of the foregoing devices is applicable to embodiments of this application.

The technical solutions in embodiments of this application may be applied to various communication systems, for example, non-terrestrial network (non-terrestrial network, NTN) systems such as a satellite communication system, a high altitude platform station (high altitude platform station, HAPS) communication system, and an uncrewed aerial vehicle, an integrated communication and navigation (integrated communication and navigation, IcaN) system, a global navigation satellite system (global navigation satellite system, GNSS), an ultra-dense low earth orbit satellite communication system, a general packet radio service (general packet radio service, GPRS), an LTE system, including an LTE frequency division duplex (frequency division duplex, FDD) system and an LTE time division duplex (time division duplex, TDD) system, long term evolution-vehicle (long term evolution-vehicle, LTE-V), long term evolution-machine (long term evolution-machine, LTE-M), a 5$^{th}$ generation (5$^{th}$ generation, 5G) system or a future evolved communication system, vehicle-to-other devices (vehicle-to-X V2X), internet of vehicles, machine type communication (machine type communication, MTC), internet of things (Internet of things, IoT), and machine to machine (machine to machine, M2M), where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The satellite communication system includes a transparent transmission satellite architecture and a non-transparent transmission satellite architecture. Transparent transmission is also referred to as bent-pipe forwarding transmission. To be specific, only processes such as frequency conversion and signal amplification are performed on a signal on a satellite, and the satellite is transparent to the signal. Non-transparent transmission is also referred to as regenerative (on-satellite access/processing) transmission. To be specific, the satellite has some or all of functions of a base station. When the satellite works in a transparent (transparent) mode, the satellite has a relay and forwarding function. The gateway has functions of a base station or some functions of a base station. Optionally, the gateway may be considered as a terrestrial base station. Alternatively, a terrestrial base station and the gateway may be deployed separately. When the satellite works in a regenerative (regenerative) mode, the satellite has a data processing capability, and functions of a base station or some functions of a base station, and the satellite may be considered as a base station.

The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for the terminal device by using a plurality of beams. The satellite uses a plurality of beams to cover a service area. Different beams may perform communication through one or more of time division, frequency division, and space division. The satellite performs wireless communication with the terminal device by using a broadcast communication signal, a navigation signal, and the like. The satellite may perform wireless communication with a ground station device. The satellite mentioned in embodiments of this application may be a satellite base station, may include an orbit receiver or a repeater configured to relay information, or may be a network side device mounted on the satellite.

FIG. 2 is a diagram of an application scenario according to an embodiment of this application. The scenario may be referred to as a "transparent satellite architecture (RAN architecture with transparent satellite)" or referred to as a bent-pipe (bent-pipe) mode. As shown in (a) of FIG. 2, communication between UE and a satellite, and communication between the satellite and a non-3$^{rd}$ generation partnership project (3$^{rd}$ generation partnership project, 3GPP) interworking function (non-3GPP interworking function, N3IWF) and a satellite hub (satellite hub) are performed by using a non-3GPP radio protocol (non-3GPP radio protocol). The N3IWF and the satellite hub may be connected to a 5G core network (5G core network, 5G CN) through a next generation (next generation, NG) interface (N2/N3), and the 5G CN is connected to a data network (data network, DN) through an N6 interface. As shown in (b) of FIG. 2, communication between the UE and the satellite, and communication between the satellite and a gNB may be performed by using an NR protocol. In the scenario, the satellite only performs frequency conversion and forwarding.

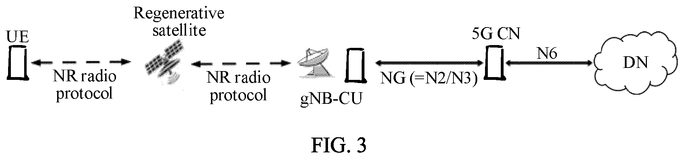

FIG. 3 is a diagram of another application scenario according to an embodiment of this application. The scenario may be referred to as a regenerative (regenerative) mode. As shown in FIG. 3, in the scenario, a satellite is a DU (NG-RAN with a regenerative satellite based on gNB-DU), communication between UE and the satellite may be performed by using an NR protocol, and the satellite is connected to a gNB-CU through an F1 interface.

It may be understood that embodiments of this application may be further applied to a scenario in which the satellite is used as integrated access and backhaul (integrated access and backhaul, IAB).

After a cell search process, a terminal device has achieved downlink synchronization with a cell, to obtain a physical cell identifier (physical cell identifier, PCI) of the cell. Then, the terminal device obtains system information (system information, SI) of the cell, and learns of a configuration of the cell, to access the cell and normally work in the cell.

The system information is cell-level information, that is, takes effect on all terminal devices that access the cell. The system information is organized in a form of system information block (system information blocks, SIBs), and each SIB includes a series of parameters related to a function.

In a 4G network system, the SI is mainly divided into a master information block (master information block, MIB) and SIBs. The SIBs are further classified into 26 types, including a SIB 1, a SIB 2, ..., and a SIB 26 (that is, a SIB type 1 to a SIB type 26). When the terminal device normally camps on the cell and initiates random access, the terminal device usually needs to obtain the MIB, the SIB 1, and the SIB 2.

In an NR system, the SI still includes a MIB and SIBs. The SIBs are further classified into nine types, including a SIB 1, a SIB 2, ..., and a SIB X. In addition, SIBs other than the MIB and the SIB 1 are redefined as other system information (other system information, OSI). When the terminal device normally camps on the cell and initiates random access, a system message obtained by the terminal device includes the MIB and the SIB 1. In addition, two new concepts are introduced into NR, which are respectively minimum system information (minimum system information, MSI) and remaining minimum system information (remaining system information, RMSI). A relationship between the minimum system information and the remaining minimum system information is shown in the following Table 1.

Table 1

| MSI | RMSI | OSI |
|-----|------|-----|
| MIB+SIB 1 | SIB 1 | SIB 2, ..., and SIB X |

Specifically, the OSI is delivered by using an SI message, and each SI message includes one or more SIBs (where the SIBs have a same transmission periodicity) that have a same scheduling requirement and that are other than the SIB 1. A SIB included in an SI message is specified by si-SchedulingInfo in the SIB 1. Each SIB can be included in only one SI message. In addition, each SI message is transmitted in only one SI-window (SI-window). To be specific: (1) one SI message is associated with one SI-window. In the SI-window, only the SI message can be sent and may be repeatedly sent for a plurality of times (where a quantity of sending times, a slot in which the SI message is sent, and the like depend on implementation of a base station), but another SI message cannot be sent. (2) SI-windows are close to each other (if the SI-windows are adjacent), and do not overlap, and there is no gap. (3) SI-window lengths of all SI messages are the same. (4) Periodicities of different SI messages are independent of each other.

In conclusion, each SI message includes at least one SIB, SIBs with a same scheduling periodicity may be transmitted in a same SI message, and each SI message is transmitted in only one SI-window.

In a satellite communication process, the satellite notifies, by using information about the SIB 1, the terminal device of SI, SIBs included in each piece of SI, an SI-window in which the SI is sent, and a time domain position and a length of the SI-window, but does not notify the terminal device of subframes in which the SI is scheduled in the SI-window. When a SIB is needed, the terminal device attempts to perform decoding in each subframe of an SI-window corresponding to an SI message including the SIB, that is, starting from a start subframe of the SI-window, for si-WindowLength subframes in total, until the SI message is successfully received.

In an initial access process of a satellite communication system, to successfully complete uplink synchronization between the satellite and the terminal device in the initial access process, the satellite sends ephemeris information to the terminal device when delivering the SIB 1. A satellite ephemeris is a position data list of an artificial satellite at each moment, and is usually used in a global positioning system (global positioning system, GPS). For example, to calculate a position of a point from a GPS observation quantity, three-dimensional coordinates at a satellite observation moment need to be learned of, and the observation moment is a reference time point of the ephemeris. The satellite ephemeris provides an orbit parameter, and the ephemeris may be used to determine coordinates of the satellite. In satellite communication, because the satellite is far away from the ground, and an air interface delay is large, the terminal device needs to accurately learn of a position of the satellite at each moment to calculate a timing advance in advance. In this way, it can be ensured that an uplink and downlink synchronization process in the initial access process is smoothly performed. However, a delay jitter, a large Doppler frequency shift, and the like caused by a high movement speed of a low earth orbit (low earth orbit, LEO) satellite greatly affect communication quality. To accurately correct a time-frequency offset, the satellite sends moving orbit information and position information of the satellite to the terminal device, so that a ground terminal device accurately estimates a moving trajectory of the satellite within specific time, calculates the timing advance based on the moving trajectory of the satellite, offsets impact caused by the air interface delay by using the timing advance, and implements an uplink and downlink synchronization procedure between a satellite side and a UE side.

Currently, the ephemeris information is included in the SIB X and sent to the terminal device. In this case, the terminal device detects a physical downlink control channel (physical downlink control channel, PDCCH) of the SIB X to obtain the ephemeris information. Specifically, the terminal device searches common search space of the PDCCH for a candidate PDCCH for sending a system information-radio network temporary identifier (radio network temporary identifier, RNTI) SI-RNTI, and obtains a SIB message used as a response after check succeeds. When obtaining a SIB X message, the terminal device determines a position of a PDCCH monitoring occasion of the SI message based on a value of a searchSpaceOtherSystemInformation field in the PDCCH.

Specifically, there may be two technical solutions based on the value of the searchSpaceOtherSystemInformation field.

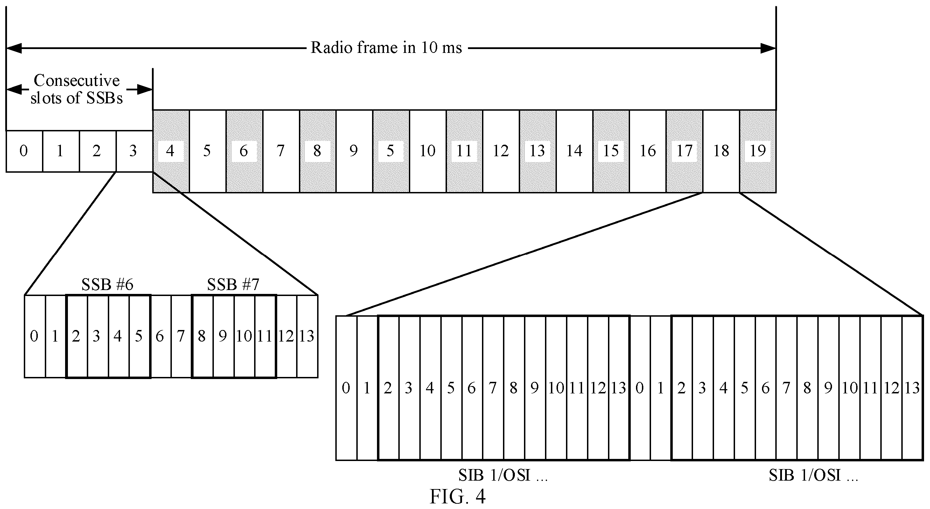

When the value of the searchSpaceOtherSystemInformation field is 0, a technical solution in which a PDCCH monitoring occasion (monitoring occasion, MO) of an SI message including the SIB X is multiplexed with a PDCCH monitoring occasion corresponding to the SIB 1 is used. In the solution, positions of the SIB 1 and the SIB X may be calculated based on a position of a synchronization signal block (synchronization signal block, SSB) in a subframe shown in FIG. 4, namely, an SSB pattern (pattern). It can be learned from FIG. 4 that eight SSBs are sent in the first 2 ms of 10 ms of a system frame, and a SIB 1 and a SIB X that correspond to the SSB are alternately sent in the last 8 ms. In this way, it can be ensured that a user obtains an ephemeris galaxy as soon as possible after receiving the SIB 1, to complete an uplink synchronization procedure. In this case, a number of a position of a PDCCH monitoring occasion of a SIB X corresponding to an SSB, for example, an SSB #0 in a slot (slot) in a subframe in which the SSB #0 is located may be calculated according to a corresponding formula.

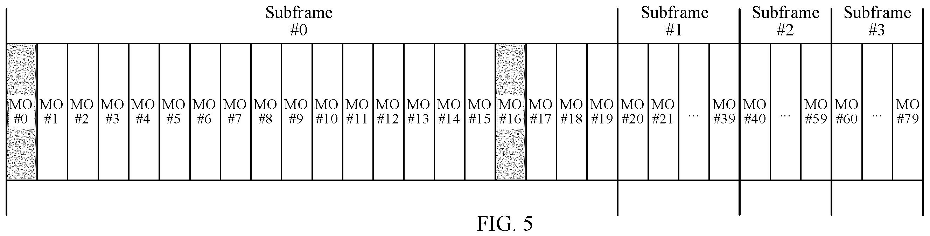

When the value of the searchSpaceOtherSystemInformation field is not 0, for user equipment on a $K^{th}$ SSB beam, a PDCCH monitoring occasion of the SI message corresponds to an $[x*N+K]^{th}$ slot (slot) in an SI-window. x=0, 1, ..., X-1. N is a total quantity of SSBs. X is calculated by dividing a quantity of PDCCH monitoring occasions in the SI-window by N. For example, it is assumed that an SI-window length=80 slots, the quantity of available PDCCH monitoring occasions in the SI-window=80, the quantity N of SSBs=16, and X=5. In this case, search space of an SI message corresponding to the SSB is shown in FIG. 5. For example, it may be calculated that PDCCH monitoring occasions of the SIB X corresponding to the SSB #0 are located in a $0^{th}$ slot, a $16^{th}$ slot, a $32^{nd}$ slot, a $48^{th}$ slot, and a $64^{th}$ slot in the SI-window.

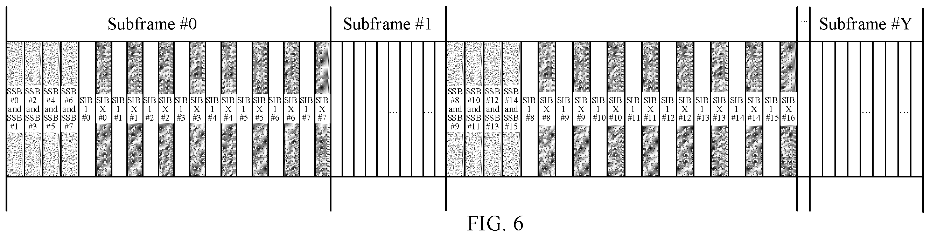

However, in a current NTN system, to ensure that a user can complete the uplink synchronization procedure as soon as possible to access a network after receiving the SSB, an SSB pattern in the system is shown in FIG. 6. That is, after the eight SSBs are sent in the first 10 ms, the SIB 1 and the SIB X are alternately sent. Then, a complete blank system frame is reserved for sending information such as the OSI.

It should be noted that, in the first solution, because search space (search space, SS) of the SIB X is multiplexed with SS of the SIB 1, search resources of the terminal device are wasted. When the terminal device searches for the SIB X, the SS of the SIB X is two consecutive slots, but one of the slots actually carries the SIB 1. Consequently, the search resources of the terminal device are wasted. In addition, once two consecutive slots corresponding to the SS of the SIB 1 are occupied by the SIB 1, or an error occurs when the user decodes the SIB X, the SIB X can be found only after at least one complete SSB periodicity. Consequently, an initial access delay is severe. For the second solution, a problem that the SS of the SIB X does not match the SSB pattern in the current NTN system occurs, and problems that blind detection resources are wasted and the initial access delay is increased are also caused. For example, when the SI-window length=80 slots, the quantity of available PDCCH monitoring occasions in the SI-window=80, and the quantity N of SSBs=16, the terminal device performs blind detection in the $0^{th}$ slot, the $16^{th}$ slot, the $32^{nd}$ slot, the $48^{th}$ slot, and the $64^{th}$ slot in the SI-window to obtain the SIB X. For a network device side, a sending position of the SIB X corresponding to the SSB #0 is in a $6^{th}$ slot in the SI-window. In other words, there is a problem that the second solution does not match the SSB pattern in the NTN system.

In view of this, embodiments of this application provide a communication method. The network device configures configuration information that matches the SSB pattern, so that the search space of the SIB X matches the SSB pattern. In addition, the SI-window length is extended to match the SSB periodicity, so that problems that the blind detection resources are wasted and the initial access delay is affected because the PDCCH MO of the SIB X does not match the SSB pattern in a current NTN scenario can be resolved.

Without loss of generality, the following describes in detail the communication method provided in embodiments of this application by using interaction between the network device and the terminal device as an example.

It should be understood that, merely for ease of understanding and description in embodiments of this application, the interaction between the network device and the terminal device is used as an example to describe in detail the method provided in embodiments of this application. However, this should not constitute any limitation on an execution body of the method provided in this application. For example, the terminal device shown in the following embodiments may be replaced with a component (for example, a circuit, a chip, a chip system, or another functional module that can invoke and execute a program) disposed in the terminal device. The network device shown in the following embodiments may be replaced with a component (for example, a circuit, a chip, a chip system, or another functional module that can invoke and execute a program) disposed in the network device, provided that communication can be implemented according to the method provided in embodiments of this application by running a program that records code of the method provided in embodiments of this application.

To better understand the technical solutions provided in this application, the following first describes in detail terms used in embodiments of this application.

    1. Physical downlink control channel (physical downlink control channel, PDCCH): The physical downlink control channel carries scheduling and other control information, specifically including a transport format, resource allocation, an uplink scheduling grant, power control, uplink retransmission information, and the like. The PDCCH channel is a set of physical resource elements (resource elements, REs), and carries uplink and downlink control information. Based on different scopes of the PDCCH, information carried on the PDCCH is classified into common control information (common search space) and dedicated control information (dedicated search space). PDCCH information of different terminal devices is distinguished by using radio network temporary identifier (radio network temporary identifier, RNTI) information corresponding to the PDCCH information.

    2. Synchronization signal/physical broadcast channel block (synchronization signal/physical broadcast channel block, SSB): The synchronization signal/physical broadcast channel block may also be referred to as a synchronization signal block. The SSB includes a primary synchronization signal (primary synchronization signal, PSS), a secondary synchronization signal (secondary synchronization signal, SSS), and a physical broadcast channel (physical broadcast channel, PBCH).

When a terminal device needs to access a network, the terminal device needs to perform cell search and obtain system information of a cell. For example, the terminal device may search for the SSB, to achieve downlink synchronization with the cell. Then, the terminal device obtains the system information (system information) of the cell, establishes a connection to the cell through a random access procedure (random access procedure), and achieves uplink synchronization.

In addition, the following descriptions are provided.

First, ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, names of first system information and second system information do not indicate that the two pieces of information are different in content, an information amount, a sending sequence, a transmit end/receive end, priorities, importance degrees, or the like. In addition, step numbers in embodiments described in this application are merely used to distinguish between different steps, but are not intended to limit a sequence of the steps.

Second, in the following embodiments, a "monitoring occasion" may also be referred to as a "monitoring opportunity". In embodiments of this application, the "monitoring occasion" and the "monitoring opportunity" are used alternately. When a difference between the "monitoring occasion" and the "monitoring opportunity" is not emphasized, meanings expressed by the "monitoring occasion" and the "monitoring opportunity" are consistent.

For ease of understanding of the communication method provided in this application, the communication method provided in this application is first described in detail with reference to the accompanying drawings.

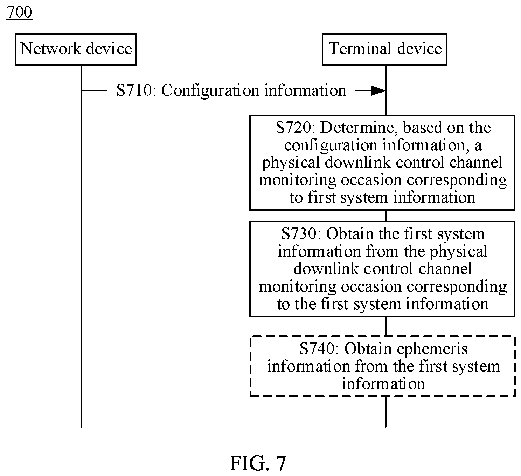

FIG. 7 is a schematic flowchart of a communication method 700 according to an embodiment of this application. The method includes a plurality of steps below.

S710: A network device sends configuration information to a terminal device.

The configuration information includes: an index of first system information; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are included in the $y^{th}$ group, where n is an integer greater than 1, Y is an integer greater than or equal to 1, y is less than or equal to Y, and M is an integer greater than 1.

It should be noted that, in this embodiment of this application, the first system information includes P types of system information. Indexes of the first system information in the configuration information are indexes of the P types of system information, and each type of system information corresponds to one index. In other words, types of the first system information are in one-to-one correspondence with the indexes of the first system information. For example, when P is 3, the indexes of the first system information are SI 1, SI 2, and SI 3.

It should be understood that, in SSB sending duration in a communication process, the SSB is sent based on a periodicity. For example, if the network device sends 256 SSBs every 640 ms when sending the SSB, a sending periodicity of the SSB is 640 ms (where for the terminal device, a receiving periodicity of the SSB is 640 ms). FIG. 6 shows one SSB periodicity. As shown in FIG. 6, one SSB periodicity may be divided into Y groups. For example, grouping may be performed based on subframes shown in FIG. 6. Alternatively, one group may be referred to as SSB burst (burst) time, and the SSB burst time is a time interval between SSBs at a same position in two adjacent SSB groups. For example, in FIG. 6, if an SSB #0 in a 1st group (a subframe #0) is located in a 1st slot (slot) in the 1st group, the SSB burst time is defined as a time interval with an SSB #8 that is located in a same slot as the SSB #0 in the group. Alternatively, the SSB burst time is a time interval between an SSB #2 and an SSB #10. The rest may be deduced by analogy. Details are not described. In FIG. 6, a quantity of SSBs in each SSB group is 8.

In an implementation, the first system information may be carried on a PDSCH scheduled by using a PDCCH, and the PDCCH is a PDCCH scrambled by using an SI_RNTI. For example, the first system information may be an SI message, for example, an SI message carrying a SIB X. In addition, because the PDCCH carries DCI scrambled by using the SI_RNTI, the physical downlink control channel monitoring occasion corresponding to the first system information may also be understood as a DCI monitoring occasion corresponding to the first system information.

In addition, in this embodiment of this application, the network device may send second system information to the terminal device to carry the configuration information. In an implementation, the second system information may be a SIB 1 or RMSI. In another implementation, the second system information may be a MIB, and the MIB includes the configuration information.

S720: The terminal device determines, based on the configuration information, the physical downlink control channel monitoring occasion corresponding to the first system information.

In an implementation, when the type of the first system information is a single type, that is, when the first system information includes one type of system information, that is, when P is equal to 1, the terminal device may determine, by using the following formula (1), the physical downlink control channel monitoring occasion corresponding to the first system information.

$$I = x * n + i * M + K \bmod n + o \quad (1)$$

I is an index of a physical downlink control channel monitoring occasion corresponding to the type of system information. K is an index of an SSB corresponding to the system information. When a system information window for sending the type of system information is T, a quantity of PDCCH monitoring occasions of the type of system information in the system information window T is W, and a quantity of SSBs (where the SSB is a sent SSB for the network device and is a received SSB for the terminal device) corresponding to the system information window is N, $X = \lceil W/N \rceil$ is defined, and x satisfies x = 0,1, ... (X- 1). X may be understood as a maximum quantity of PDCCH monitoring occasions of one type of system information corresponding to each SSB in T. In addition, i satisfies $i = \lfloor K/n \rfloor$. o is a quantity of physical downlink control channel monitoring occasions included in a time period of the SSB (where the SSB is a sent SSB for the network device and is a received SSB for the terminal device) in the yth group. ⌈ ⌉ indicates rounding up, ⌊ ⌋ indicates rounding down, and mod is a modulo operator.

For example, it is assumed that a subcarrier spacing (subcarrier spacing, SCS) is 30 kHz, the

SSB periodicity is 640 ms, the quantity n of SSBs in one group in one SSB periodicity is 8, the quantity M of physical downlink control channel monitoring occasions that correspond to the type of system information and that are in one SSB group is 20, a time length (or a window length or a periodicity) T of the system information window is 640 ms, the quantity W of PDCCH monitoring occasions of the type of system information in the system information window T is 640, and the quantity N of SSBs in the system information window is 256.

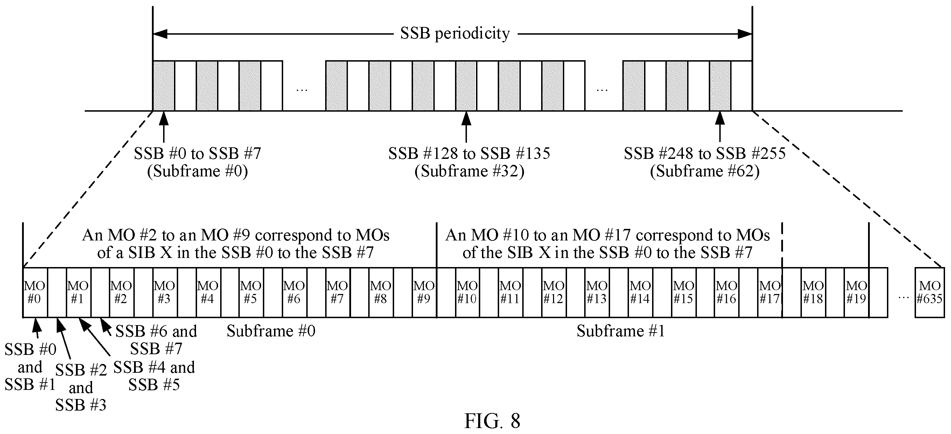

$$X = \lceil 640/256 \rceil = 3$$ may be obtained. In this case, search space of the system information corresponding to the SSB is shown in FIG. 8. In FIG. 8, in the first 20 ms, the network device sends eight SSBs to the terminal device. When the terminal device searches for the type of system information, an MO #2 to an MO #19 correspond to monitoring occasions of an SSB #0 to an SSB #7.

In another implementation, when types of the first system information are P types, that is, when the first system information includes P types of system information, and P is an integer greater than 1, the terminal device may determine, by using the following formula (2), a physical downlink control channel monitoring occasion corresponding to each of the P types of system information.

$$I = x * n + i * M + K \bmod n + o \quad (2)$$

I is an index of a physical downlink control channel monitoring occasion corresponding to a pth type of system information. K is an index of an SSB corresponding to the pth type of system information. When a system information window for sending the P types of system information is T, a quantity of PDCCH monitoring occasions of the P types of system information in the system information window T is W, and a quantity of SSBs (where the SSB is a sent SSB for the network device and is a received SSB for the terminal device) corresponding to the system information window is N, X is equal to $\lceil W/N \rceil$, x is a value satisfying (x mod P=p-1) in x = 0,1, ... (X- 1), and p = 1,2 ... P. X may be understood as a maximum quantity of PDCCH monitoring occasions of P types of system information corresponding to each SSB in T. In addition, i satisfies $i = \lfloor K/n \rfloor$. o is a quantity of physical downlink control channel monitoring occasions included in a time period of the SSB (where the SSB is a sent SSB for the network device and is a received SSB for the terminal device) in the y$^{th}$ group. $\lceil \rceil$ indicates rounding up, $\lfloor \rfloor$ indicates rounding down, and mod is a modulo operator.

It should be understood that the p$^{th}$ type of system information is one of the P types of system information. In addition, system information windows corresponding to the P types of system information are the same, and are all the window T of the first system information.

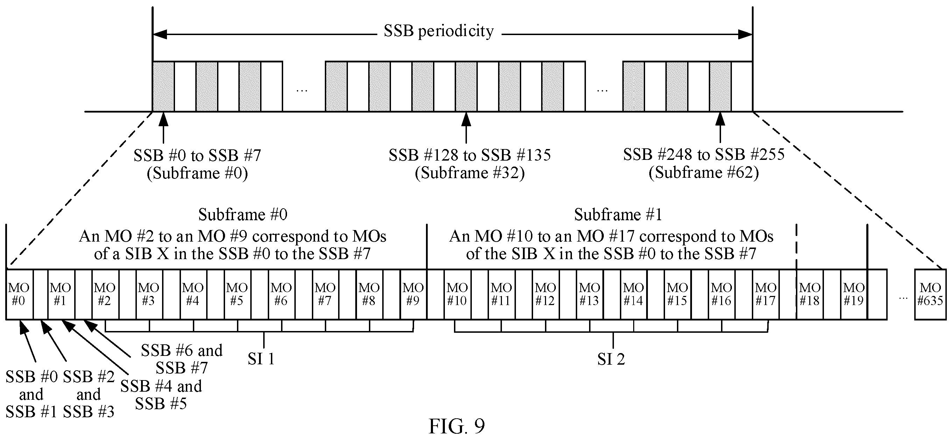

For example, when P is equal to 2, the first system information includes two types of system information including the SI 1 and the SI 2. In this case, values of p are 1 and 2. It is assumed that an SCS is 30 kHz, the SSB periodicity is 640 ms, the quantity n of SSBs in one group in one SSB periodicity is 8, the quantity M of physical downlink control channel monitoring occasions that correspond to the first system information and that are in one SSB group is 20, a time length (or a window length or a periodicity) T of the system information window is 640 ms, the quantity W of PDCCH monitoring occasions of the first system information in the system information window T is 640, and the quantity N of SSBs in the system information window is 256. X = [640/256] = 3 may be obtained, and x=0, 1, or 2. In this case, search space of the system information corresponding to the SSB is shown in FIG. 9. In FIG. 9, in the first 20 ms, the network device sends eight SSBs to the terminal device. When the terminal device searches for the first system information, an MO #2 to an MO #9 respectively correspond to monitoring occasions (corresponding to x=0) for performing blind detection on the SI 1 in an SSB #0 to an SSB #7, and an MO #10 to an MO #17 respectively correspond to monitoring occasions (corresponding to x=1) for performing blind detection on the SI 2 in the SSB #0 to the SSB #7. It should be noted that, when x=2, an MO #18 and an MO #19 may be allocated to at least one of the SI 1 and the SI 2. For example, both the MO #18 and the MO #19 may be allocated to the SI 1. Alternatively, both the MO #18 and the MO #19 are allocated to the SI 2. Alternatively, the MO #18 may be allocated to the SI 1, the MO #19 may be allocated to the SI 2, and so on.

S730: The terminal device obtains the first system information from the physical downlink control channel monitoring occasion corresponding to the first system information.

After determining the monitoring occasion of the first system information by using the foregoing formula (1) or formula (2), the terminal device obtains the first system information from the physical downlink control channel monitoring occasion through blind detection.

It should be noted that, to enable the physical downlink control channel monitoring occasion of the system information corresponding to the SSB to better match an SSB pattern, in an implementation, the window length T of a physical downlink control channel monitoring window corresponding to the P types of system information (where P is greater than or equal to 1) may be defined to be equal to the SSB periodicity.

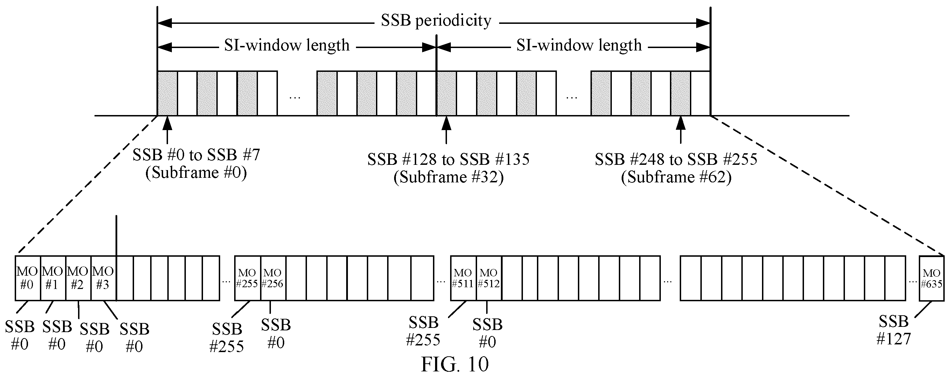

Specifically, descriptions may be provided with reference to FIG. 10. In FIG. 10, N=256, the SSB periodicity=640 ms, the system information window length T=320 ms, the quantity W of physical downlink control channel monitoring occasions in the system information window length=640, and X=3. If a mapping rule between the SSB and the physical downlink control channel monitoring occasion of the system information in FIG. 5 is used, the following problems occur.

  1. An MO #0 to an MO #255 in a 1$^{st}$ SI-window correspond to an SSB #0 to an SSB #255, but the SSB #128 to the SSB #255 are not sent.
  2. An MO #0 to an MO #255 in a 2$^{nd}$ SI-window still correspond to the SSB #0 to the SSB #255, and blind detection resources are severely wasted.

Therefore, in this embodiment of this application, the window length of the system information may alternatively be equal to 1.28s, 2.56s, or the like to match the SSB pattern, to further optimize the search space for searching for the system information.

In addition, it should be noted that the communication method provided in this embodiment of this application is further compatible with an LTE system. When an SSB configured by the network device has only one periodicity, and there is one group of the SSB, where n is a total quantity of SSBs, it indicates an SSB configuration in the LTE system.

Optionally, in this embodiment of this application, the method 700 further includes the following step: S740: The terminal device obtains ephemeris information from the P types of system information.

Specifically, when the terminal device needs to obtain the ephemeris information sent by a satellite, the terminal device obtains the ephemeris information from the P types of detected system information, estimates a moving trajectory of the satellite within specific time by using the ephemeris information, and may calculate a timing advance based on the moving trajectory of the satellite, offset impact caused by an air interface delay by using the timing advance, and implement an uplink and downlink synchronization procedure between the satellite and the terminal.

It should be understood that, when the first system information includes one type of system information, the terminal device may obtain the ephemeris information from the type of system information. When the first system information includes a plurality of types of system information, the terminal device may obtain the ephemeris information from the plurality of types of system information.

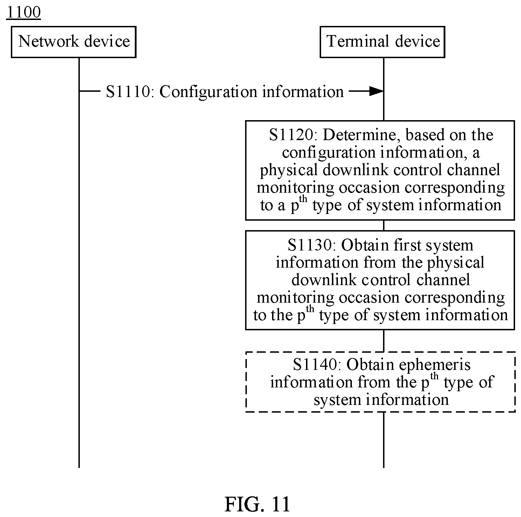

FIG. 11 is a schematic flowchart of a communication method 1100 according to an embodiment of this application. The method includes a plurality of steps below.

S1110: A network device sends configuration information to a terminal device.

The configuration information includes: an index of first system information, where the first system information includes P types of system information, and P is an integer greater than or equal to 1; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to a $p^{th}$ type of system information and that are included in the $y^{th}$ group, where the $p^{th}$ type of first system information is one of the P types of system information, n is an integer greater than 1, Y is an integer greater than or equal to 1, y is less than or equal to Y, M is an integer greater than 1, and p is an integer greater than or equal to 1 and less than or equal to P.

Similarly, indexes of the first system information in the configuration information are indexes of the P types of system information, and each type of system information corresponds to one index. In other words, types of system information are in one-to-one correspondence with indexes of the system information.

For descriptions of the Y groups in the SSB periodicity, refer to related descriptions in S710. Details are not described herein again.

In an implementation, the first system information may be carried on a PDSCH scheduled by using a PDCCH, and the PDCCH is a PDCCH scrambled by using an SI_RNTI. For example, the first system information may be an SI message, for example, an SI message carrying a SIB X. In addition, because the PDCCH carries DCI scrambled by using the SI_RNTI, a physical downlink control channel monitoring occasion corresponding to the first system information may also be understood as a DCI monitoring occasion corresponding to the first system information.

In addition, the network device may send second system information to the terminal device to carry the configuration information. In an implementation, the second system information may be a SIB 1 or RMSI. In another implementation, the second system information may be a MIB, and the MIB includes the configuration information.

S1120: The terminal device determines, based on the configuration information, the physical downlink control channel monitoring occasion corresponding to the $p^{th}$ type of system information.

Specifically, the terminal device may determine, by using the following formula (3), the physical downlink control channel monitoring occasion corresponding to the $p^{th}$ type of system information.

$$I = x*n + i*M + K \bmod n + o \quad (3)$$

I is an index of the physical downlink control channel monitoring occasion corresponding to the $p^{th}$ type of system information. K is an index of an SSB corresponding to the $p^{th}$ type of system information. When a system information window for sending the P types of system information is T, a quantity of physical downlink control channel monitoring occasions that correspond to the $p^{th}$ type of system information and that are in the system information window of the P types of system information is W, and a quantity of SSBs (where the SSB is a sent SSB for the network device and is a received SSB for the terminal device) corresponding to the system information window is N, $X = \lceil W/N \rceil$ is defined, and x satisfies x = 0,1, ... (X- 1). X may be understood as a maximum quantity of PDCCH monitoring occasions of a $p^{th}$ type of system information corresponding to each SSB in T, and p = 1,2 ... P. In addition, i satisfies $i = \lfloor K/n \rfloor$. o is a quantity of physical downlink control channel monitoring occasions included in a time period of the SSB (where the SSB is a sent SSB for the network device and is a received SSB for the terminal device) in the $y^{th}$ group. $\lceil \ \rceil$ indicates rounding up, $\lfloor \ \rfloor$ indicates rounding down, and mod is a modulo operator.

In the method 1100 shown in FIG. 11, the terminal device may calculate, based on the configuration information, the physical downlink control channel monitoring occasion corresponding to the $p^{th}$ type of system information in the P types of system information.

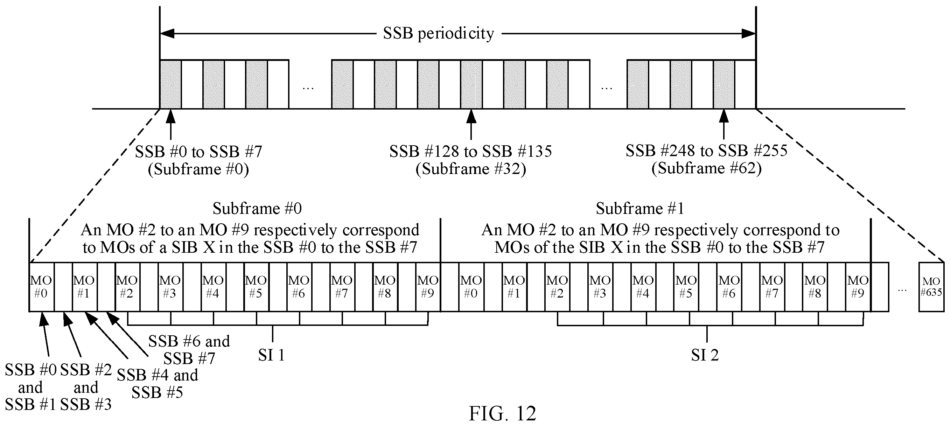

For example, when P is equal to 2, the first system information includes two types of system information including SI 1 and SI 2. In this case, values of p are 1 and 2. It is assumed that an SCS is 30 kHz, the SSB periodicity is 640 ms, the quantity n of SSBs in one group in one SSB periodicity is 8, the quantity M of physical downlink control channel monitoring occasions that correspond to the first system information and that are in one group in one SSB periodicity is 20, a time length (or a window length or a periodicity) T of the system information window is 640 ms, the quantity W of PDCCH monitoring occasions of the first system information in the system information window T is 640, and the quantity N of SSBs in the system information window is 256. X = [640/256] = 3 may be obtained. In this case, search space of system information corresponding to the SSB is shown in FIG. 12. In FIG. 12, in the first 20 ms, the network device sends eight SSBs to the terminal device. When the terminal device searches for two types of system information, an MO #2 to an MO #9 respectively correspond to monitoring occasions for performing blind detection on the SI 1 in an SSB #0 to an SSB #7, and an MO #2 to an MO #9 respectively correspond to monitoring occasions for performing blind detection on the SI 2 in the SSB #0 to the SSB #7.

It should be understood that time domain positions of physical downlink control channel monitoring occasions corresponding to all the types of first system information are different. As shown in FIG. 11, when calculation is performed according to the foregoing formula (3), it may be obtained that indexes of monitoring occasions corresponding to the SI 1 and the SI 2 are the same, but time domain positions of the monitoring occasions corresponding to the SI 1 and the SI 2 are different.

S1130: The terminal device obtains the $p^{th}$ type of system information from the physical downlink control channel monitoring occasion corresponding to the $p^{th}$ type of system information.

After determining the monitoring occasion of the $p^{th}$ type of system information by using the foregoing formula (3), the terminal device obtains the $p^{th}$ type of system information from the physical downlink control channel monitoring occasion through blind detection.

It should be noted that, to enable the physical downlink control channel monitoring occasion of the system information corresponding to the SSB to better match an SSB pattern, in an implementation, the window length T of a physical downlink control channel monitoring window corresponding to the P types of system information may be defined to be equal to the SSB periodicity.

Optionally, in this embodiment of this application, the method 1100 further includes the following step: S1140: The terminal device obtains ephemeris information from the $P^{th}$ type of system information.

Specifically, when the terminal device needs to obtain the ephemeris information sent by a satellite, the terminal device obtains the ephemeris information from the $p^{th}$ type of detected system information, estimates a moving trajectory of the satellite within specific time by using the ephemeris information, and may calculate a timing advance based on the moving trajectory of the satellite, offset impact caused by an air interface delay by using the timing advance, and implement an uplink and downlink synchronization procedure between the satellite and the terminal.

It should be understood that the embodiments in FIG. 7 and FIG. 11 in embodiments of this application are merely examples for description, and an execution sequence is not limited in the figures. A person skilled in the art may flexibly adjust a sequence of steps based on the examples in the figures. In addition, sequence numbers of the foregoing processes do not mean an execution sequence. The execution sequence of the processes should be determined based on functions and internal logic of the processes. In addition, the foregoing steps are not mandatory steps. When one or more of the steps are missing, a problem to be resolved in this application can also be resolved, and the technical solutions corresponding to the steps also fall within the scope disclosed in this application. Numbers or sequence numbers in the foregoing processes are merely for differentiation for ease of description, and should not constitute any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on requirements. Correspondingly, an apparatus provided in embodiments of this application may also correspondingly implement these features or functions. Details are not described herein.

In addition, the solutions in embodiments of this application may be properly combined for use, and explanations or descriptions of terms in embodiments may be cross-referenced or explained in embodiments. This is not limited.

In the foregoing embodiments provided in this application, solutions of the communication method provided in embodiments of this application are separately described from perspectives of each device/network element and interaction between devices/network elements. It may be understood that, to implement the foregoing functions, each network element and device includes a corresponding hardware structure and/or software module for performing each function. A person skilled in the art should easily be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

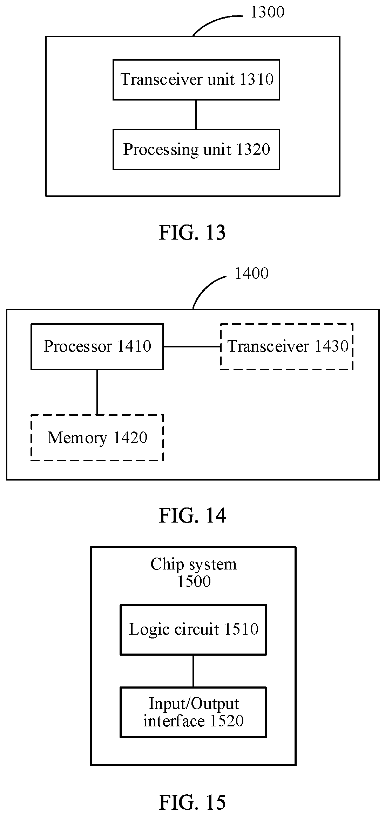

FIG. 13 is a block diagram of a communication apparatus 1300 according to an embodiment of this application. The apparatus 1300 includes one or more virtual units, such as a transceiver unit 1310 and a processing unit 1320. The transceiver unit 1310 may be configured to implement a corresponding communication function. The transceiver unit 1310 may also be referred to as a communication interface or a communication unit. The processing unit 1320 may be configured to: implement a corresponding processing function, for example, determine a physical downlink control channel monitoring occasion corresponding to first system information. The transceiver unit 1310 may also be referred to as a transceiver module, and the processing unit 1320 may also be referred to as a processing module.

Optionally, the apparatus 1300 further includes a storage unit. The storage unit may be configured to store instructions and/or data. The processing unit 1320 may read the instructions and/or data in the storage unit, so that the apparatus implements actions of the device in the foregoing method embodiments. The storage unit may also be referred to as a storage module.

In a first design, the apparatus 1300 may be the terminal device in the foregoing embodiments, or may be a component (for example, a chip) in the terminal device. The apparatus 1300 may implement steps or procedures performed by the terminal device in the foregoing method embodiments. The transceiver unit 1310 may be configured to: perform sending/receiving-related operations of the terminal device in the foregoing method embodiments, for example, sending/receiving-related operations of the terminal device in the embodiment shown in FIG. 7, or sending/receiving-related operations of the terminal device in the embodiment shown in FIG. 11. The processing unit 1320 may be configured to: perform a processing-related operation of the terminal device in the foregoing method embodiments, for example, a processing-related operation of the terminal device in the embodiment shown in FIG. 7, or a processing-related operation of the terminal device in the embodiment shown in FIG. 11.

In a possible implementation, the transceiver unit 1310 is configured to receive configuration information, where the configuration information includes: an index of the first system information; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are included in the $y^{th}$ group, where n is an integer greater than 1, Y is an integer greater than or equal to 1, y is less than or equal to Y, and M is an integer greater than 1.

The processing unit 1320 is configured to: determine, based on the configuration information, the physical downlink control channel monitoring occasion corresponding to the first system information. The processing unit 1320 is further configured to obtain the first system information from the physical downlink control channel monitoring occasion corresponding to the first system information.

It should be understood that a specific process in which the units or modules perform the foregoing corresponding steps is described in detail in the foregoing method embodiments. For brevity, details are not described herein again.

In addition, the transceiver unit 1310 and the processing unit 1320 in the communication apparatus 1300 may further implement another operation or function of the terminal device in the foregoing method. Details are not described herein again.

In a second design, the apparatus 1300 may be the network device in the foregoing embodiments, or may be a component (for example, a chip) in the network device. The apparatus 1300 may implement steps or procedures performed by the network device in the foregoing method embodiments. The transceiver unit 1310 may be configured to: perform sending/receiving-related operations of the network device in the foregoing method embodiments, for example, sending/receiving-related operations of the network device in the embodiment shown in FIG. 7, or sending/receiving-related operations of the network device in the embodiment shown in FIG. 11. The processing unit 1320 may be configured to: perform a processing-related operation of the network device in the foregoing method embodiments, for example, a processing-related operation of the network device in the embodiment shown in FIG. 7, or a processing-related operation of the network device in the embodiment shown in FIG. 11.

In a possible implementation, the transceiver unit 1310 is configured to send configuration information, where the configuration information includes: an index of the first system information; a quantity n of synchronization information blocks SSBs, where n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are included in the $y^{th}$ group, where n is an integer greater than 1, Y is an integer greater than or equal to 1, y is less than or equal to Y, and M is an integer greater than 1. The configuration information is used by the terminal device to determine the physical downlink control channel monitoring occasion corresponding to the first system information.

The transceiver unit 1310 and the processing unit 1320 in the communication apparatus 1300 may further implement another operation or function of the network device in the foregoing method. Details are not described herein again.

It should be understood that a specific process in which the units or modules perform the foregoing corresponding steps is described in detail in the foregoing method embodiments. For brevity, details are not described herein again.

It should be further understood that the apparatus 1300 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

For example, a product implementation form of the apparatus 1300 provided in this embodiment of this application is program code that can be run on a computer.

For example, the apparatus 1300 provided in this embodiment of this application may be a communication device, or may be a chip, a chip system (for example, a system on chip (system on chip, SoC)), or a circuit used in the communication device. When the apparatus 1300 is the communication device, the transceiver unit 1310 may be a transceiver or an input/output interface, and the processing unit 1320 may be a processor. When the apparatus 1300 is the chip, the chip system, or the circuit used in the communication device, the transceiver unit 1310 may be an input/output interface, an interface circuit, an output circuit, an input circuit, a pin, a related circuit, or the like on the chip, the chip system, or the circuit, and the processing unit 1320 may be a processor, a processing circuit, a logic circuit, or the like. In addition, the transceiver unit 1310 may be a transceiver circuit (for example, may include a receiving circuit and a sending circuit), and the processing unit may be a processing circuit.

FIG. 14 is a block diagram of a communication apparatus 1400 according to an embodiment of this application. The apparatus 1400 includes a processor 1410, and the processor 1410 is coupled to a memory 1420. Optionally, the apparatus further includes the memory 1420, configured to store a computer program or instructions and/or data. The processor 1410 is configured to execute the computer program or the instructions stored in the memory 1420, or read the data stored in the memory 1420, to perform the methods in the foregoing method embodiments.

Optionally, there are one or more processors 1410.

Optionally, there are one or more memories 1420.

Optionally, the memory 1420 and the processor 1410 are integrated together or disposed separately.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

In a solution, the apparatus 1400 is configured to implement operations performed by the terminal device in the foregoing method embodiments.

For example, the processor 1410 is configured to execute the computer program or the instructions stored in the memory 1420, to implement related operations of the terminal device in the foregoing method embodiments, for example, the method performed by the terminal device in the embodiment shown in FIG. 7, or the method performed by the terminal device in the embodiment shown in FIG. 11.

In another solution, the apparatus 1400 is configured to implement operations performed by the network device in the foregoing method embodiments.

For example, the processor 1410 is configured to execute the computer program or the instructions stored in the memory 1420, to implement related operations of the network device in the foregoing method embodiments, for example, the method performed by the network device in the embodiment shown in FIG. 7, or for another example, the method performed by the network device in the embodiment shown in FIG. 11.

In an implementation process, the steps of the foregoing methods may be implemented by using an integrated logic circuit of hardware in the processor 1410 or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1420, and the processor 1410 reads information in the memory 1420 and implements the steps of the foregoing methods in combination with hardware of the processor 1410. To avoid repetition, details are not described herein again.

It should be understood that, in embodiments of this application, the processor may be one or more integrated circuits, and is configured to execute a related program, to perform method embodiments of this application.

The processor (for example, the processor 1410) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 1410 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 1420) may store data needed by the processor (for example, the processor 1410) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification is intended to include but is not limited to these memories and any memory of another appropriate type.

The memory (for example, the memory 1420) and the processor (for example, the processor 1410) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 15 is a block diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, so that the chip system 1500 can implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

In a solution, the chip system 1500 is configured to implement operations performed by the terminal device in the foregoing method embodiments.

For example, the logic circuit 1510 is configured to implement a processing-related operation performed by the terminal device in the foregoing method embodiments, for example, a processing-related operation performed by the terminal device in the embodiment shown in FIG. 7, or a processing-related operation performed by the terminal device in the embodiment shown in FIG. 11. The input/output interface 1520 is configured to implement sending and/or receiving-related operations performed by the terminal device in the foregoing method embodiments, for example, sending and/or receiving-related operations performed by the terminal device in the embodiment shown in FIG. 7, or sending and/or receiving-related operations performed by the terminal device in the embodiment shown in FIG. 11.

In another solution, the chip system 1500 is configured to implement operations performed by the network device in the foregoing method embodiments.

For example, the logic circuit 1510 is configured to implement a processing-related operation performed by the network device in the foregoing method embodiments, for example, a processing-related operation performed by the network device in the embodiment shown in FIG. 7, or for another example, a processing-related operation performed by the network device in the embodiment shown in FIG. 11. The input/output interface 1520 is configured to implement sending and/or receiving-related operations performed by the network device in the foregoing method embodiments, for example, sending and/or receiving-related operations performed by the network device in the embodiment shown in FIG. 7, or for another example, sending and/or receiving-related operations performed by the network device in the embodiment shown in FIG. 11.

An embodiment of this application further provides a computer-readable storage medium. The computer-readable storage medium stores computer instructions for implementing the method performed by the communication apparatus (for example, the terminal device, or for another example, the network device) in the foregoing method embodiments.

An embodiment of this application further provides a computer program product, including instructions. When the instructions are executed by a computer, the method performed by the communication apparatus (for example, the terminal device, or for another example, the network device) in the foregoing method embodiments is implemented.

An embodiment of this application further provides a communication system. The communication system includes one or more of the terminal device or the network device in the foregoing embodiments.

For explanations and beneficial effects of related content in any one of the foregoing provided apparatuses, refer to corresponding method embodiments provided above. Details are not described herein again.

In several embodiments provided in this application, it should be understood that the disclosed apparatus and method may be implemented in other manners. For example, the apparatus embodiments described above are merely examples. For example, division into the foregoing units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located at one position, or may be distributed on a plurality of network units. Some or all of the units may be selected based on actual requirements to implement the solutions provided in this application.

In addition, functional units in embodiments of this application may be integrated into one unit, each unit may exist alone physically, or two or more units may be integrated into one unit.

A person of ordinary skill in the art may be aware, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

When software is used for implementation, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device or a chip system in the terminal device, and comprising:

   receiving configuration information, wherein the configuration information comprises: an index of first system information; a quantity n of synchronization information blocks SSBs, wherein n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are comprised in the $y^{th}$ group, wherein n is an integer greater than 1, Y is an integer greater than or equal to 1, y is less than or equal to Y, and M is an integer greater than 1;
   determining, based on the configuration information, the physical downlink control channel monitoring occasion corresponding to the first system information; and
   obtaining the first system information from the physical downlink control channel monitoring occasion corresponding to the first system information.

2. The method according to claim 1, wherein the first system information comprises one type of system information, and
   the determining, based on the configuration information, the physical downlink control channel monitoring occasion corresponding to the first system information comprises:

an index I of a physical downlink control channel monitoring occasion corresponding to the type of system information satisfies the following relationship:

$$I = x * n + i * M + K \bmod n + o,$$

, wherein
K is an index of an SSB corresponding to the type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions comprised in a time period of receiving the SSB in the $y^{th}$ group, W is a quantity of physical downlink control channel monitoring occasions in a system information window for receiving the type of system information, T is a time length of the system information window, the system information window is used to receive the type of system information, $\lceil \ \rceil$ indicates rounding up, $\lfloor \ \rfloor$ indicates rounding down, and mod is a modulo operator.

3. The method according to claim 1, wherein the first system information comprises P types of system information, P is an integer greater than 1, and the determining, based on the configuration information, the physical downlink control channel monitoring occasion corresponding to the first system information comprises:

an index I of a physical downlink control channel monitoring occasion corresponding to a $p^{th}$ type of system information in the P types of system information satisfies the following relationship:

$$I = x * n + i * M + K \bmod n + o,$$

, wherein
K is an index of an SSB corresponding to the $p^{th}$ type of system information, $X = \lceil W/N \rceil$, x is a value satisfying (x mod P=p-1) in x = 0,1, ... (X-1), p = 1,2 ... P, N is a total quantity of SSBs in T, $i = \lfloor K/n \rfloor$, o is a quantity of physical downlink control channel monitoring occasions comprised in a time period of receiving the SSB in the $y^{th}$ group, W is a quantity of physical downlink control channel monitoring occasions in a system information window for receiving the P types of system information, T is a time length of the system information window, the system information window is used to receive the P types of system information, the $p^{th}$ type of system information is one of the P types of system information, $\lceil \ \rceil$ indicates rounding up, $\lfloor \ \rfloor$ indicates rounding down, and mod is a modulo operator.

4. The method according to any one of claims 1 to 3, wherein a window length of a physical downlink control channel monitoring window corresponding to the first system information is equal to the SSB periodicity.

5. The method according to any one of claims 1 to 4, wherein the first system information comprises ephemeris information.

6. The method according to any one of claims 1 to 4, wherein the receiving configuration information comprises:
receiving second system information, wherein the second system information comprises the configuration information.

7. A communication method, applied to a terminal device or a chip system in the terminal device, and comprising:

receiving configuration information, wherein the configuration information comprises: an index of first system information, wherein the first system information comprises P types of system information, and P is an integer greater than or equal to 1; a quantity n of synchronization information blocks SSBs, wherein n is a quantity of SSBs in a $y^{th}$ group in Y groups in one SSB periodicity, and the $y^{th}$ group is any one of the Y groups; and a quantity M of physical downlink control channel monitoring occasions that correspond to a $p^{th}$ type of system information and that are comprised in the $y^{th}$ group, wherein the $p^{th}$ type of system information is one of the P types of system information, n is an integer greater than 1, Y is an integer greater than or equal to 1, y is less than or equal to Y, M is an integer greater than 1, and p is an integer greater than or equal to 1 and less than or equal to P;
determining, based on the configuration information, the physical downlink control channel monitoring occasion corresponding to the $p^{th}$ type of system information; and
obtaining the $p^{th}$ type of system information from the physical downlink control channel monitoring occasion corresponding to the $p^{th}$ type of system information.

8. The method according to claim 7, wherein the determining, based on the configuration information, the physical downlink control channel monitoring occasion corresponding to the $p^{th}$ type of system information comprises:

an index I of the physical downlink control channel monitoring occasion corresponding to the $p^{th}$ type of system information satisfies the following relationship:

$$I = x * n + i * M + K \bmod n + o$$

, wherein
K is an index of an SSB corresponding to the $p^{th}$ type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions comprised in a time period of receiving the SSB in the $y^{th}$ group, W is a quantity of physical downlink control channel monitoring occasions that correspond to the $p^{th}$ type of system information and that are in a system information window for receiving the P types of system information, T is a time length of the system information window, the system information window is used to receive the P types of system information, $\lceil \; \rceil$ indicates rounding up, $\lfloor \; \rfloor$ indicates rounding down, and mod is a modulo operator.

9. The method according to claim 7 or 8, wherein time domain positions of physical downlink control channel monitoring occasions corresponding to all of the P types of system information are different.

10. The method according to any one of claims 7 to 9, wherein a window length of a physical downlink control channel monitoring window corresponding to the P types of system information is equal to the SSB periodicity.

11. The method according to any one of claims 7 to 10, wherein the P types of system information comprise ephemeris information.

12. The method according to any one of claims 7 to 11, wherein the receiving configuration information comprises:
receiving second system information, wherein the second system information comprises the configuration information.

13. A communication method, applied to a network device or a chip system in the network device, and comprising:

sending configuration information, wherein the configuration information is used by a terminal device to determine a physical downlink control channel monitoring occasion corresponding to first system information, and obtain the first system information from the physical downlink control channel monitoring occasion corresponding to the first system information, and the configuration information comprises: an index of the first system information; a quantity n of synchronization information blocks SSBs, wherein n is a quantity of SSBs in a $y^{th}$ group in Y groups in one SSB periodicity, and the $y^{th}$ group is any one of the Y groups; and a quantity M of physical downlink control channel monitoring occasions that correspond to the first system information and that are comprised in the $y^{th}$ group, wherein n is an integer greater than 1, Y is an integer greater than or equal to 1, y is less than or equal to Y, and M is an integer greater than 1.

14. The method according to claim 13, wherein the first system information comprises one type of system information, and

an index I of a physical downlink control channel monitoring occasion corresponding to the type of system information satisfies the following relationship:

$$I = x * n + i * M + K \bmod n + o$$

, wherein
K is an index of an SSB corresponding to the type of system information, X = [W/N], x = 0,1, ... (X-1), N is a total quantity of SSBs in T, $i = \lfloor K/n \rfloor$, o is a quantity of physical downlink control channel monitoring occasions comprised in a time period of sending the SSB in the $y^{th}$ group, W is a quantity of physical downlink control channel monitoring occasions in a system information window for sending the type of system information, T is a time length of the system information window, the system information window is used to send the type of system information, $\lceil \; \rceil$ indicates rounding up, $\lfloor \; \rfloor$ indicates rounding down, and mod is a modulo operator.

15. The method according to claim 13, wherein the first system information comprises P types of system information, P is an integer greater than 1, and

an index I of a physical downlink control channel monitoring occasion corresponding to a $p^{th}$ type of system information in the P types of system information satisfies the following relationship:

$$I = x * n + i * M + K \bmod n + o$$

, wherein

K is an index of an SSB corresponding to the $p^{th}$ type of system information, $X = \lceil W/N \rceil$, x is a value satisfying (x mod P=p-1) in x = 0,1, ... (X-1), p = 1,2 ... P, N is a total quantity of SSBs in T, $i = \lfloor K/n \rfloor$, o is a quantity of physical downlink control channel monitoring occasions comprised in a time period of sending the SSB in the $y^{th}$ group, W is a quantity of physical downlink control channel monitoring occasions in a system information window for sending the P types of system information, T is a time length of the system information window, the system information window is used to send the P types of system information, the $p^{th}$ type of system information is one of the P types of system information, $\lceil \; \rceil$ indicates rounding up, $\lfloor \; \rfloor$ indicates rounding down, and mod is a modulo operator.

16. The method according to any one of claims 13 to 15, wherein a window length of a physical downlink control channel monitoring window corresponding to the first system information is equal to the SSB periodicity.

17. The method according to any one of claims 13 to 16, wherein the first system information comprises ephemeris information.

18. The method according to any one of claims 13 to 17, wherein the sending configuration information comprises:

sending second system information, wherein the second system information comprises the configuration information.

19. A communication method, applied to a network device or a chip system in the network device, and comprising:

sending configuration information, wherein the configuration information is used by a terminal device to determine a physical downlink control channel monitoring occasion corresponding to a $p^{th}$ type of system information, and obtain the $p^{th}$ type of system information from the physical downlink control channel monitoring occasion corresponding to the $p^{th}$ type of system information, and the configuration information comprises: an index of first system information, wherein the first system information comprises P types of system information, and P is an integer greater than or equal to 1; a quantity n of synchronization information blocks SSBs, wherein n is a quantity of SSBs in a $y^{th}$ group in Y groups in one SSB periodicity, and the $y^{th}$ group is any one of the Y groups; and a quantity M of physical downlink control channel monitoring occasions that correspond to the $p^{th}$ type of system information and that are comprised in the $y^{th}$ group, wherein the $p^{th}$ type of system information is one of the P types of system information, n is an integer greater than 1, Y is an integer greater than or equal to 1, y is less than or equal to Y, M is an integer greater than 1, and p is an integer greater than or equal to 1 and less than or equal to P.

20. The method according to claim 18, wherein

an index I of the physical downlink control channel monitoring occasion corresponding to the $p^{th}$ type of system information satisfies the following relationship:

$$I = x * n + i * M + K \bmod n + o,$$

, wherein

K is an index of an SSB corresponding to the $p^{th}$ type of system information, $X = \lceil W/N \rceil$, x = 0,1, ... (X-1), N is a total quantity of SSBs in T, $i = \lfloor K/n \rfloor$, o is a quantity of physical downlink control channel monitoring occasions comprised in a time period of sending the SSB in the $y^{th}$ group, W is a quantity of physical downlink control channel monitoring occasions that correspond to the $p^{th}$ type of system information and that are in a system information window for sending the P types of system information, T is a time length of the system information window, the system information window is used to send the P types of system information, $\lceil \; \rceil$ indicates rounding up, $\lfloor \; \rfloor$ indicates rounding down, and mod is a modulo operator.

21. The method according to claim 19 or 20, wherein time domain positions of physical downlink control channel monitoring occasions corresponding to all of the P types of system information are different.

22. The method according to any one of claims 19 to 21, wherein a window length of a physical downlink control channel monitoring window corresponding to the P types of system information is equal to the SSB periodicity.

23. The method according to any one of claims 19 to 22, wherein the P types of system information comprise ephemeris information.

24. The method according to any one of claims 19 to 23, wherein the sending configuration information comprises:

sending second system information, wherein the second system information comprises the configuration information.

25. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 6, the method according to any one of claims 7 to 12, the method according to any one of claims 13 to 18, or the method according to any one of claims 19 to 24.

26. A chip, comprising a processor and a communication interface, wherein the communication interface is configured to receive data and/or information, and transmit the received data and/or information to the processor, and the processor processes the data and/or the information, to perform the method according to any one of claims 1 to 6, the method according to any one of claims 7 to 12, the method according to any one of claims 13 to 18, or the method according to any one of claims 19 to 24.

27. A computer-readable storage medium, wherein the computer-readable storage medium stores computer instructions, and when the computer instructions are run on a computer, the method according to any one of claims 1 to 6, the method according to any one of claims 7 to 12, the method according to any one of claims 13 to 18, or the method according to any one of claims 19 to 24 is implemented.

28. A computer program product, wherein the computer program product comprises computer program code, and when the computer program code is run on a computer, the method according to any one of claims 1 to 6, the method according to any one of claims 7 to 12, the method according to any one of claims 13 to 18, or the method according to any one of claims 19 to 24 is implemented.

Network device 120

Network device 122

New radio

NG interface

Terminal
device 110

NG
interface

Xn
interface

NG
interface

Core network device 130

New radio

Terminal
device 111

Network device 121

FIG. 1

Transparent
forwarding
satellite

5G CN

UE

N6

DN

Non-3GPP
radio protocol

Non-3GPP
radio protocol

N3IWF and
satellite hub

NG (=N2/N3)

(a)

Transparent
forwarding
satellite

5G CN

UE

N6

DN

NR radio
protocol

NR radio
protocol

gNB

NG (=N2/N3)

(b)

FIG. 2

FIG. 3

Radio frame in 10 ms

Consecutive slots of SSBs

SIB 1/OSI …

SIB 1/OSI …

SSB #6

SSB #7

FIG. 4

| Subframe #0 | | | | | | | | | | | | | | | | | | | | Subframe #1 | | | Subframe #2 | | Subframe #3 | |
|---|---|---|---|---|---|---|---|---|---|---|---|---|---|---|---|---|---|---|---|---|---|---|---|---|---|---|---|

| MO #0 | MO #1 | MO #2 | MO #3 | MO #4 | MO #5 | MO #6 | MO #7 | MO #8 | MO #9 | MO #10 | MO #11 | MO #12 | MO #13 | MO #14 | MO #15 | MO #16 | MO #17 | MO #18 | MO #19 | MO #20 | MO #21 | ... | MO #39 | MO #40 | ... | MO #59 | MO #60 | ... | MO #79 |

FIG. 5

FIG. 6

700

| Network device | | Terminal device |

S710: Configuration information →

S720: Determine, based on the
configuration information, a
physical downlink control channel
monitoring occasion corresponding
to first system information

S730: Obtain the first system
information from the physical
downlink control channel
monitoring occasion corresponding
to the first system information

S740: Obtain ephemeris
information from the first system
information

**FIG. 7**

SSB periodicity

SSB #0 to SSB #7
(Subframe #0)

SSB #128 to SSB #135
(Subframe #32)

SSB #248 to SSB #255
(Subframe #62)

An MO #2 to an MO #9 correspond to MOs
of a SIB X in the SSB #0 to the SSB #7

An MO #10 to an MO #17 correspond to MOs
of the SIB X in the SSB #0 to the SSB #7

| MO #0 | MO #1 | MO #2 | MO #3 | MO #4 | MO #5 | MO #6 | MO #7 | MO #8 | MO #9 | MO #10 | MO #11 | MO #12 | MO #13 | MO #14 | MO #15 | MO #16 | MO #17 | MO #18 | MO #19 | ... | MO #635 |

SSB #0
and
SSB #1

SSB #2
and
SSB #3

SSB #4 and
SSB #5

SSB #6 and
SSB #7

Subframe #0

Subframe #1

FIG. 8

SSB periodicity

SSB #0 to SSB #7
(Subframe #0)

SSB #128 to SSB #135
(Subframe #32)

SSB #248 to SSB #255
(Subframe #62)

Subframe #0
An MO #2 to an MO #9 correspond to MOs
of a SIB X in the SSB #0 to the SSB #7

Subframe #1
An MO #10 to an MO #17 correspond to MOs
of the SIB X in the SSB #0 to the SSB #7

| MO #0 | MO #1 | MO #2 | MO #3 | MO #4 | MO #5 | MO #6 | MO #7 | MO #8 | MO #9 | MO #10 | MO #11 | MO #12 | MO #13 | MO #14 | MO #15 | MO #16 | MO #17 | MO #18 | MO #19 | ... | MO #635 |

SSB #6 and
SSB #7

SI 1

SI 2

SSB #0
and
SSB #1

SSB #2
and
SSB #3

SSB #4 and
SSB #5

FIG. 9

FIG. 10

1100

```
┌──────────────────┐                          ┌──────────────────┐
│  Network device  │                          │  Terminal device │
└──────────────────┘                          └──────────────────┘
         │                                              │
         ├── S1110: Configuration information ──►       │
         │                                              │
         │                      ┌───────────────────────┴───────────┐
         │                      │  S1120: Determine, based on the   │
         │                      │   configuration information, a    │
         │                      │ physical downlink control channel │
         │                      │ monitoring occasion corresponding │
         │                      │  to a p^th type of system         │
         │                      │        information                │
         │                      └───────────────────────┬───────────┘
         │                      ┌───────────────────────┴───────────┐
         │                      │   S1130: Obtain first system      │
         │                      │   information from the physical   │
         │                      │     downlink control channel      │
         │                      │ monitoring occasion corresponding │
         │                      │  to the p^th type of system       │
         │                      │        information                │
         │                      └───────────────────────┬───────────┘
         │                      ┌ ─ ─ ─ ─ ─ ─ ─ ─ ─ ─ ─ ┴ ─ ─ ─ ─ ─ ┐
         │                        S1140: Obtain ephemeris
         │                      │ information from the p^th type of  │
         │                             system information
         │                      └ ─ ─ ─ ─ ─ ─ ─ ─ ─ ─ ─ ┬ ─ ─ ─ ─ ─ ┘
         │                                              │
```

S1120: Determine, based on the configuration information, a physical downlink control channel monitoring occasion corresponding to a $p^{th}$ type of system information

S1130: Obtain first system information from the physical downlink control channel monitoring occasion corresponding to the $p^{th}$ type of system information

S1140: Obtain ephemeris information from the $p^{th}$ type of system information

FIG. 11

SSB periodicity

SSB #0 to SSB #7
(Subframe #0)

SSB #128 to SSB #135
(Subframe #32)

SSB #248 to SSB #255
(Subframe #62)

Subframe #0
An MO #2 to an MO #9 respectively correspond
to MOs of a SIB X in the SSB #0 to the SSB #7

Subframe #1
An MO #2 to an MO #9 respectively correspond to
MOs of the SIB X in the SSB #0 to the SSB #7

| MO #0 | MO #1 | MO #2 | MO #3 | MO #4 | MO #5 | MO #6 | MO #7 | MO #8 | MO #9 | MO #0 | MO #1 | MO #2 | MO #3 | MO #4 | MO #5 | MO #6 | MO #7 | MO #8 | MO #9 | ... | MO #635 |

SSB #6 and
SSB #7

SI 1

SI 2

SSB #0
and
SSB #1

SSB #2
and
SSB #3

SSB #4 and
SSB #5

FIG. 12

_1300_

Transceiver unit 1310

Processing unit 1320

**FIG. 13**

_1400_

Processor 1410

Transceiver 1430

Memory 1420

**FIG. 14**

Chip system
1500

Logic circuit 1510

Input/Output
interface 1520

**FIG. 15**

## INTERNATIONAL SEARCH REPORT

| International application No. |
| --- |
| **PCT/CN2023/117806** |

**A. CLASSIFICATION OF SUBJECT MATTER**

H04W48/12(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXT, ENTXTC, WPABS, 3GPP: 系统信息, SI1, SIX, SIB?, 索引, ID, 标识, 识别符, 同步信息块, SSB?, 检测, 监测, 监控, 监视, 时机, 机会, 数目, 数量, system information?, index?, identifier?, synchronization, signal block?, SS Block?, monitor+, occasion?, MO?, number, SI-index?, searchSpaceOtherSystemInformation, NTN, x*n+i*M

**C. DOCUMENTS CONSIDERED TO BE RELEVANT**

| Category* | Citation of document, with indication, where appropriate, of the relevant passages | Relevant to claim No. |
| --- | --- | --- |
| A | SAMSUNG. "SI Message Transmission in NR-U" *3GPP TSG-RAN2 106, R2-1905716*, 17 May 2019 (2019-05-17), sections 2 and 5 | 1-28 |
| A | US 2022030546 A1 (QUALCOMM INCORPORATED) 27 January 2022 (2022-01-27) entire document | 1-28 |
| A | WO 2021257971 A1 (CONVIDA WIRELESS, LLC) 23 December 2021 (2021-12-23) entire document | 1-28 |
| A | WO 2021230726 A1 (LG ELECTRONICS INC.) 18 November 2021 (2021-11-18) entire document | 1-28 |
| A | SAMSUNG. "SI Message Transmission/Reception in NR-U" *3GPP TSG-RAN2 103bis, R2-1813691*, 12 October 2018 (2018-10-12), entire document | 1-28 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 November 2023** | **22 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/117806** |

### C. DOCUMENTS CONSIDERED TO BE RELEVANT

| Category* | Citation of document, with indication, where appropriate, of the relevant passages | Relevant to claim No. |
|---|---|---|
| A | SAMSUNG. "PDCCH Monitoring Occasions in SI Window" *3GPP TSG-RAN2 103bis, R2-1813693*, 12 October 2018 (2018-10-12), entire document | 1-28 |
| A | SAMSUNG ELECTRONICS. "PDCCH Monitoring Occasions in SI Window" *3GPP TSG-RAN2 103bis, R2-1813695*, 12 October 2018 (2018-10-12), entire document | 1-28 |
| A | SAMSUNG. "SI Message Transmission in NR-U" *3GPP TSG-RAN2 105bis, R2-1903109*, 12 April 2019 (2019-04-12), entire document | 1-28 |

Form PCT/ISA/210 (second sheet) (July 2022)

INTERNATIONAL SEARCH REPORT
Information on patent family members

International application No.

**PCT/CN2023/117806**

| Patent document cited in search report | | | Publication date (day/month/year) | Patent family member(s) | | | Publication date (day/month/year) |
|---|---|---|---|---|---|---|---|
| US | 2022030546 | A1 | 27 January 2022 | WO | 2022020341 | A2 | 27 January 2022 |
| | | | | EP | 4186291 | A2 | 31 May 2023 |
| | | | | IN | 202247067310 | A | 09 December 2022 |
| | | | | CN | 115804177 | A | 14 March 2023 |
| WO | 2021257971 | A1 | 23 December 2021 | EP | 4169299 | A1 | 26 April 2023 |
| | | | | US | 2023224800 | A1 | 13 July 2023 |
| | | | | CN | 116134899 | A | 16 May 2023 |
| WO | 2021230726 | A1 | 18 November 2021 | US | 2023180110 | A1 | 08 June 2023 |
| | | | | KR | 20230010623 | A | 19 January 2023 |

Form PCT/ISA/210 (patent family annex) (July 2022)

**REFERENCES CITED IN THE DESCRIPTION**

**Patent documents cited in the description**

- CN 202211137677